# EUROPEAN PATENT APPLICATION

(11) **EP 4 783 064 A1**
(43) Date of publication of application: **29.07.2026**
(21) Application number: 25220715.4
(22) Date of filing: 04.12.2025
(51) Int. Cl.: G06K 7/10

(54) **SYSTEMS, METHODS, AND APPARATUS FOR ANTENNA SWITCHING**

(30) Priority: 23.12.2024 IN 202411102107
(71) Applicant: Hand Held Products, Inc., Charlotte, NC 28202 (US)
(72) Inventor: BISWAS, Gourango, Charlotte, 28202 (US); KUMAR, Muthu, Charlotte, 28202 (US); PANDEY, Pankaj, Charlotte, 28202 (US)
(74) Representative: Haseltine Lake Kempner LLP

(57) **Abstract**

A system and a method for power control based antenna switching control mechanism is provided. The system comprises a plurality of antenna modules arranged in a daisy chain configuration. The plurality of antenna modules is configured to receive a control signal having an input voltage (Vᵢₙ) and a radio frequency (RF) signal from a radio frequency identification (RFID) reader via a communication line. Each antenna module comprises an antenna element and at least one radio frequency (RF) switch configured to couple the antenna element with the RFID reader based at least on a comparison of the input voltage (Vᵢₙ) with a threshold voltage (Vₜₕ₁) and a threshold voltage (Vₜₕ₂), wherein the at least one RF switch is configured to (1) allow communication with the antenna module in a connected state or (2) communicate the control signal to a next antenna module in a through state.

## Description

### FIELD OF THE DISCLOSURE

An example embodiment relates generally to radio frequency identification (RFID) systems and more particularly, to systems, methods, and apparatus for antenna switching in the RFID systems.

### BACKGROUND OF THE DISCLOSURE

Switching between antennas within a daisy chain antenna configuration is often a time-consuming task that directly affects productivity. In the daisy chain antenna configuration, each antenna switch necessitates a control command to be sent to a radio frequency identification (RFID) tag associated the antenna. Such control command entails several operations on the RFID tag, including singulation and write operations. The antenna switching is expected to occur successfully only upon successful completion of these operations. However, switching between the antennas in the daisy chain architecture introduces signal degradation, delay in switching between the antennas leading to data loss or corruption. Additionally, the distribution of power to antennas in a daisy chain architecture often leads to power loss and failures.

Applicant has identified various issues and challenges associated with the current RFID systems. However, with creativity, hard work and innovation, the present disclosure has addressed many of these problems through its systems and methods.

### SUMMARY OF THE DISCLOSURE

The following presents a simplified summary in order to provide a basic understanding of some aspects of the present disclosure. This summary is not an extensive overview and is intended to neither identify key or critical elements nor delineate the scope of such elements. Its purpose is to present some concepts of the described features in a simplified form as a prelude to the more detailed description that is presented later.

In an example embodiment, a system for power control based antenna switching mechanism is disclosed. The system comprises a plurality of antenna modules arranged in a daisy chain configuration. The plurality of antenna modules is configured to receive, from a radio frequency identification (RFID) reader, a control signal having an input voltage (Vᵢₙ) and a radio frequency (RF) signal, via a communication line. Each antenna module of the plurality of antenna modules further comprises an antenna element. Further, at least one radio frequency (RF) switch is configured to couple the antenna element with the RFID reader based at least on a comparison of the input voltage (Vᵢₙ) with a threshold voltage (Vₜₕ₁) and a threshold voltage (Vₜₕ₂). Further, the at least RF switch (1) is configured to allow communication with the antenna module in a connected state, or (2) communicate the control signal to a next antenna module in a through state.

In some embodiments, the at least one RF switch allows communication with the antenna module when Vᵢₙ = Vₜₕ₁ or communicates the control signal to a next antenna module when Vᵢₙ > Vₜₕ₁ or Vᵢₙ = Vₜₕ₂.

In some embodiments, the Vₜₕ₁ corresponds to the threshold voltage for the connected state and the Vₜₕ₂ corresponds to the threshold voltage for the through state. In some embodiments, a plurality of preconfigured power detector circuits configured to detect the input voltage (Vᵢₙ). In some embodiments, a plurality of comparators configured to compare the input voltage (Vᵢₙ) with the threshold voltage (Vₜₕ₁) and the threshold voltage (Vₜₕ₂) respectively.

Further, a plurality of rotary switch is connected to the plurality of preconfigured power detector circuits and configured for setting the threshold voltage (Vₜₕ₁) and the threshold voltage (Vₜₕ₂) for each antenna module.

In some embodiments, each antenna module further comprising a direct coupling (DC) coupler that is configured to receive the input voltage (Vᵢₙ) of the control signal from the RFID reader. Each antenna module further comprising a RF coupler that is configured to receive the RF signal of the control signal from the RFID reader. In some embodiments, the RFID reader further comprises of at least a digital to analog converter (DAC) configured to provide a DAC output voltage (Vₒᵤₜ), wherein the DAC output voltage (Vₒᵤₜ) acts as the input voltage (Vᵢₙ) for the antenna module. Further, the RFID reader comprises a coupler configured to superimpose the DAC output voltage (Vₒᵤₜ) over the RF signal, for forming the control signal for transmission. Further, the RFID reader comprises an antenna port configured to send the control signal to the DC coupler and the RF coupler of the antenna module.

In some embodiments, the RFID reader is configured to read one or more RFID tags associated with each antenna module of the plurality of antenna modules. In some embodiments, each antenna module further comprises an RFID integrated circuit (IC) coupled to the plurality of preconfigured power detector circuits and the plurality of comparators, and configured to switch each antenna module between the connected state and the through state.

In some embodiments, the DC coupler and the RF coupler of each antenna module are connected to the at least one RF switch. Further, the plurality of preconfigured power detector circuits, the plurality of comparators and the RFID IC are connected between the DC coupler, the RF coupler and the at least one RF switch in a parallel connection.

In another example embodiment, a method for power control based antenna switching control mechanism is provided. The method comprises steps of receiving, via a plurality of antenna modules, a control signal having an input voltage (Vᵢₙ) and a radio frequency (RF) signal. Further, the method comprises steps of switching, via at least one radio frequency (RF) switch of each of the plurality of antenna modules, the antenna module in a connected state, to allow communication with the antenna module or in a through state, to communicate the control signal to a next antenna module based at least on the comparison.

In some embodiments, the method further comprises allowing, via the at least one RF switch, communication with the antenna module when Vᵢₙ = a threshold voltage (Vₜₕ₁) or communicating, via the at least one RF switch, the control signal to a next antenna module when Vᵢₙ > Vₜₕ₁ or Vᵢₙ = a threshold voltage (Vₜₕ₂). In some embodiments, the method further comprises configuring, via the RFID reader, the input voltage (Vᵢₙ) to an incremented input voltage to bypass the antenna module to a next antenna module.

In some embodiments, a RFID reader is configured to send the control signal to the plurality of antenna modules arranged in a daisy chain configuration, via a communication line.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1A illustrates a block diagram of a system for power control based antenna switching control mechanism, in accordance with an example embodiment of the present disclosure;
FIG. 1B illustrates a block diagram of an antenna module, in accordance with an example embodiment of the present disclosure;
FIG. 1C illustrates a block diagram of the system for power control based antenna switching control mechanism, in accordance with an example embodiment of the present disclosure;
FIG. 2 illustrates a table showing different threshold voltages for different antenna module, in accordance with an example embodiment of the present disclosure;
FIG. 3 illustrates a distributed antenna network for the system for power control based antenna switching control mechanism, in accordance with an example embodiment of the present disclosure;
FIG. 4 illustrates a linear distributed antenna network configuration, in accordance with an example embodiment of the present disclosure;
FIG. 5 illustrates a tree distributed antenna network configuration, in accordance with an example embodiment of the present disclosure;
FIG. 6 illustrates a grid distributed antenna network configuration, in accordance with an example embodiment of the present disclosure; and
FIG. 7 illustrates a flowchart of a method for power control based antenna switching control mechanism, in accordance with an example embodiment of the present disclosure.

### DETAILED DESCRIPTION

Some embodiments will now be described more fully hereinafter with reference to the accompanying drawings, in which some, but not all, embodiments are shown. Indeed, various embodiments may be embodied in many different forms and should not be construed as limited to the embodiments set forth herein; rather, these embodiments are provided so that this disclosure will satisfy applicable legal requirements. As discussed herein, the protection devices may be referred to use by humans, but may also be used to raise and lower objects unless otherwise noted.

The components illustrated in the figures represent components that may or may not be present in various embodiments of the invention described herein such that embodiments may include fewer or more components than those shown in the figures while not departing from the scope of the invention. Some components may be omitted from one or more figures or shown in dashed line for visibility of the underlying components.

Various embodiments include a system and method for power control based antenna switching control mechanism. In some embodiments, the system and method is disclosed for a distributed antenna system. In some embodiments, an antenna module is provided that uses a radio-frequency (RF) cable for transmitting radio frequency (RF) signals or control signals. With the antenna module, a smart reconfigurable distributed antenna system that may be driven by only one radio-frequency identification (RFID) reader is provided. Such system uses a reduced or minimum amount of RF cables to connect the antenna modules (e.g., antenna modules connected in a daisy chain configuration).

For example, each antenna module of the plurality of antenna modules has a unique addressable ID and may be controlled with RFID signals or control signals via a single RF cable. The antenna module is configured to obtain power via the RF cable and has several ports. The antenna module has a plurality of preconfigured power detector circuits and a plurality of comparators and, detects input voltage from the control signal using the plurality of preconfigured power detector circuits. The input voltage is then compared using the plurality of comparators, with two threshold voltages of the antenna module set by a plurality of rotary switch. Further, a connected state or a through state is activated for the antenna module to establish communication of the RFID reader. The RFID reader then successfully scans the RFID tag associated with the antenna module with as less delay as possible, in scanning and reading the RFID tag. Accordingly, low cost switching devices may be used with one RFID reader and one communication line, such as one stretch of RF cable (with inserted antenna modules) and multiple antenna modules to cover areas that require multiple antennas (e.g., package or product inventory).

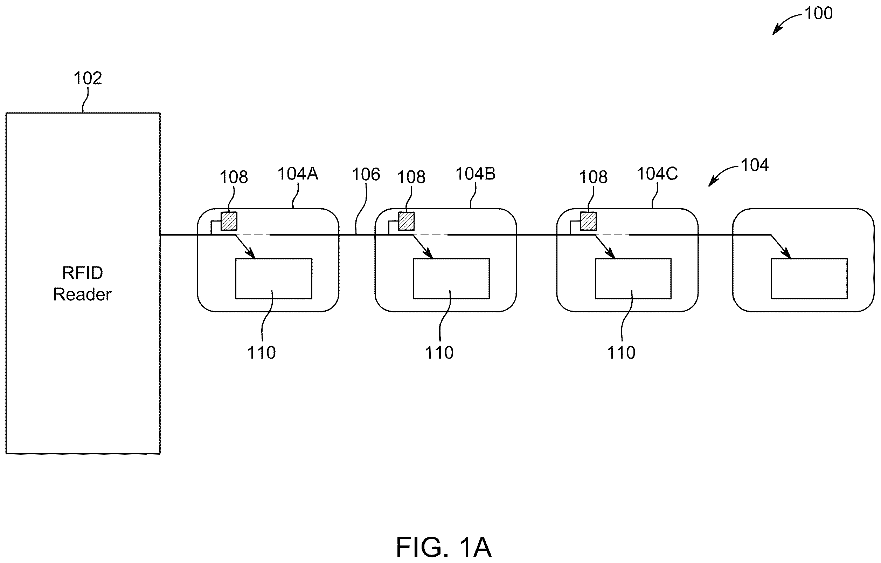

FIG. 1A illustrates a block diagram of a system 100 for power control based antenna switching control mechanism, in accordance with an example embodiment of the present disclosure.

The system 100 may comprise a radio frequency identification (RFID) reader 102 and a plurality of antenna modules 104 connected to each other via a communication line 106. In some embodiments, the communication line 106 may be an RF cable. Further, each antenna module from the plurality of antenna modules 104 may comprise a power sense-based switching circuit 108 and an antenna element 110. The power sense-based switching circuit 108 may be configured to switch the plurality of antenna modules 104 in two switching states i.e. a through state and a connected state. In the connected state, an antenna module (e.g., a first antenna module) from the plurality of antenna modules 104 may communicate with the RFID reader 102. Further, the antenna module from the plurality of antenna modules 104 may comprise an antenna element 110 that facilitates the antenna module to communicate with the RFID reader 102 through the antenna module or at least one rotary switch. In the through state, the RFID reader 102 may communicate to a next antenna module (e.g., a second antenna module) of the plurality of antenna modules 104 through the antenna module of the plurality of antenna modules 104. Hereinafter, the antenna element 110 may be referred to as the local antenna 110. Each antenna module from the plurality of antenna modules 104 having an antenna arrangement or configuration may be designed or reconfigured for different applications without the need for extra external controllers and wiring.

In some embodiments, each antenna module from the plurality of antenna modules 104 may be configured to operate or behave similar to or as an RFID tag (not shown). Each antenna module from the plurality of antenna modules 104 operating as RFID tag may imply that each antenna module may perform various operations including, but not limited to data transmission, identification, tracking, or mirroring the capabilities associated with RFID tags. Further, the RFID reader 102 or an RFID type of transmitter/receiver may be used to selectively activate each antenna module of the plurality of antenna modules 104.

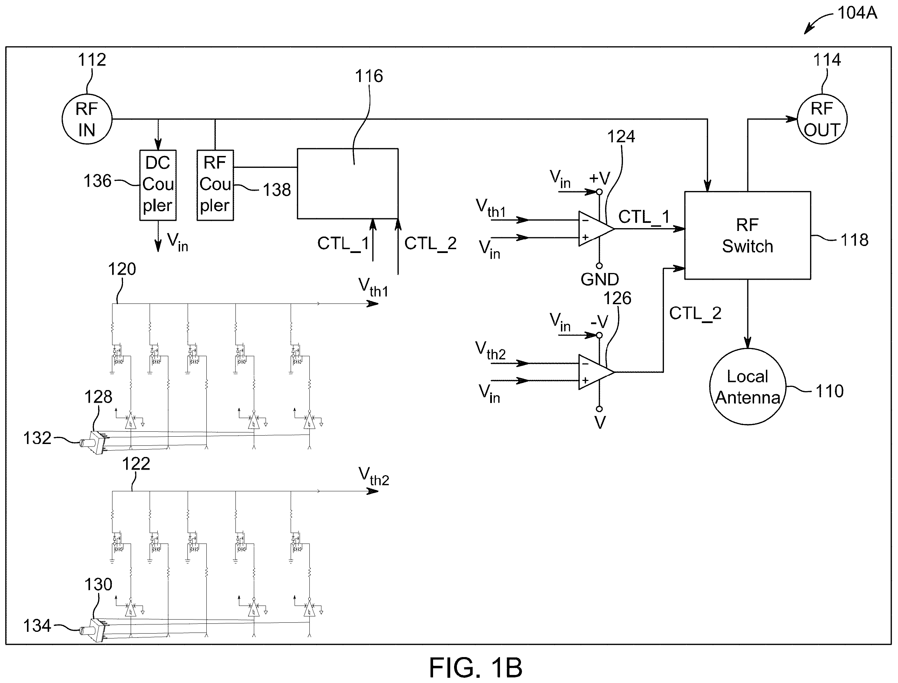

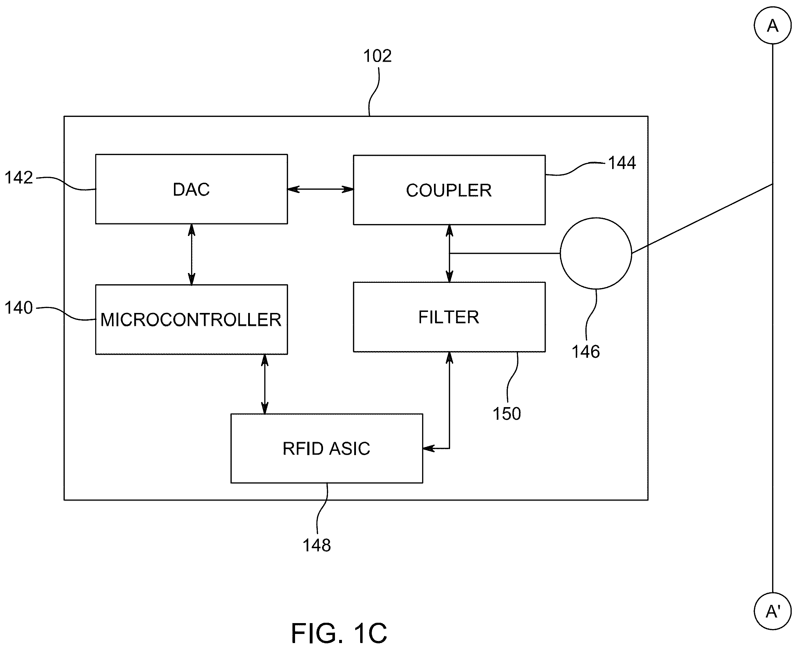

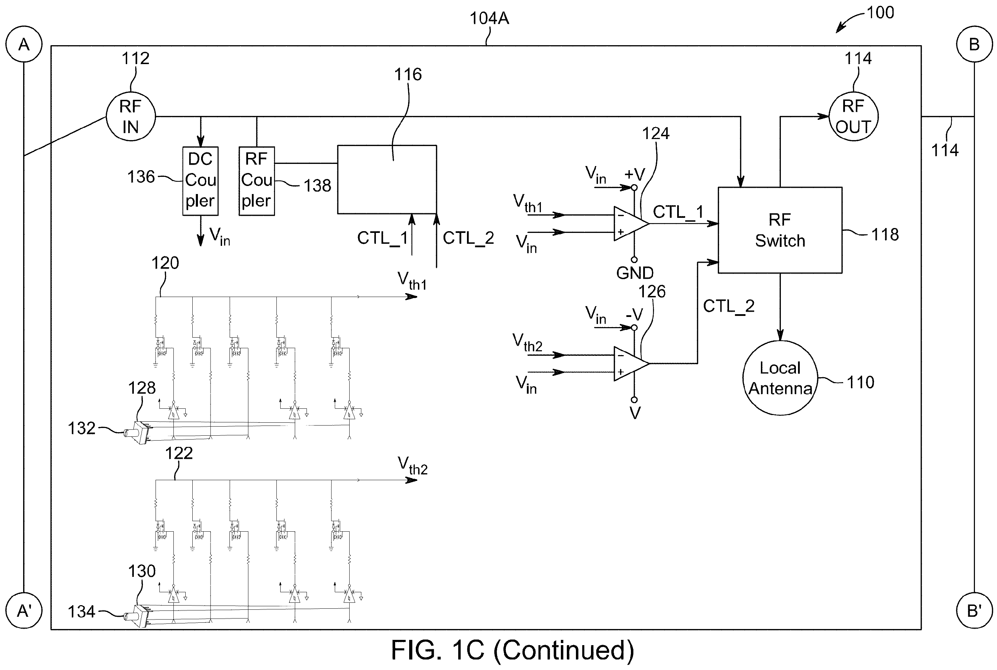

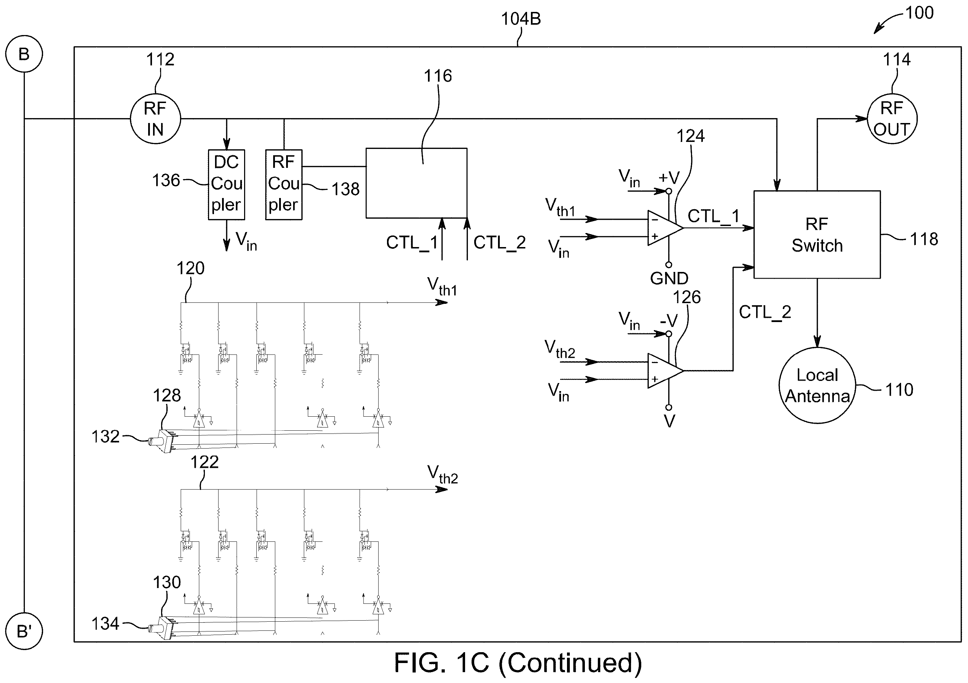

As discussed above in FIG. 1A, the RFID reader 102 may be connected to the plurality of antenna modules 104. Further, the plurality of antenna modules 104 may comprise an antenna module 104A, an antenna module 104B, an antenna module 104C and so on, in a daisy chain configuration, as shown in FIGS. 1B-1C. Referring to FIG. 1B, the antenna module 104A may be a three-port device having a radio frequency (RF) input (IN) port 112, a RF output (OUT) port 114 (also termed as a first output port) and a second output port (not shown). The antenna module 104A may be configured to be switchable into two switching states i.e., the connected state and the through state. In some embodiments, the antenna module 104A, in the connected state, may connect the RF IN port 112 to the second output port that may be further connected to the local antenna 110 of the antenna module 104A, in which the local antenna 110 may be in an activated state to allow communication with the RFID reader 102. In some embodiments, the through state may connect the RF IN port 112 via the RF OUT port 114 to the next antenna module 104B connected next to the antenna module 104A, as illustrated in FIG. 1C, in which the local antenna 110 connected with the antenna module 104 through the second output port is in a deactivated state.

In some embodiments, the antenna module 104A may include a RFID integrated circuit (IC) 116. The RFID IC 116 may have a unique addressable ID such as a Gen2 EPC ID. The antenna module 104A may also include at least one RF switch 118. Further, the RFID IC 116 may be coupled to the at least one RF switch 118. In some embodiments, the at least one RF switch 118 may be referred as a switching element. The at least one RF switch 118 may be controllable to switch between the RF OUT port 114 and the second output port. The at least one RF switch 118 may have two outputs in which first output (not shown) may be connected to the RF OUT port 114 and the second output (not shown) may be connected to the second output port which is connected to the local antenna 110. In some embodiments, the RFID IC 116 may be configured to hold instructions to set the antenna module 104 in the two switching states.

In an example embodiment, the RFID IC 116 may include but is not limited to an EM4325 Gen 2 IC with a Serial Peripheral Interface (SPI) that outputs signals to switch the at least one RF switch 118. In another example embodiment, the RFID IC 116 may be MIFARE DESFire, Monza R6, Higgs-3, or any other RFID IC known in the art, without departing from the scope of the disclosure. In some embodiments, the at least one RF switch 118 may be controlled by signals from RFID IC general-purpose input/output (GPIO) pins of the RFID IC 116. In some example embodiments, the at least one RF switch 118 may be a pseudomorphic high-electron-mobility transistor (pHEMT) gallium arsenide (GaAs) switch, such as an AS193-73LF RF switch. In other example embodiments, the at least one RF switch 118 may be a PIN diode-based RF switch such as MASW-011098 RF switch, Single-Pole Four-Throw (SP4T) switch such as ADGM1304 switch or any other RF switch known in the art. Further, the at least one RF switch 118 may be switched electrically.

In some embodiments, the control signal may be received by the RFID IC 116 and then, transmitted to the at least one RF switch 118, during the connected state of the at least one RF switch 118. It may be noted that the RFID IC 116 may operate as an RF front end and protocol handler for communication with the RFID tag based on the two switching states. Further, the RFID IC 116 may allow the antenna module 104A to be switched between the through state and the connected state to activate the local antenna 110. As a result, communication may be allowed, such as communication with one or more RFID tags using RFID communication protocols between the antenna module 104A and the RFID reader 102 using the RFID IC 116.

In some embodiments, including the above-discussed configurations, the plurality of antenna modules 104 may correspond as one or more RFID tags to the RFID reader 102. The one or more RFID tags may be controlled using RFID signal protocols or the control signal. For example, each antenna module of the plurality of antenna modules 104 may have a unique ID corresponding to the RFID IC 116 that may be communicated in a header portion of a transmit signal. Thus, in operation, communication with the antenna module 104 may be performed in a manner to communicate with the one or more RFID tags.

In an example embodiment, a Gen2 RFID communication protocol may be used to communicate with the RFID IC 116 to control switching of the at least one RF switch 118 between the through state and the connected state. The communication in various embodiments includes, for example, an RFID communication setup sequence (including a handshake) to communicate with the antenna module 104. By sending the control signal addressed to a particular RFID IC 116, the antenna module 104 associated with that RFID IC 116 may be controlled. In some embodiments, the determination of IDs associated with the RFID IC 116 and the antenna module 104 may be stored in a lookup table (not shown) or other memory to allow for lookup of the IDs for the RFID IC 116.

In some embodiments, the antenna module 104A may further comprise a plurality of preconfigured power detector circuits and a plurality of comparators. The plurality of preconfigured power detector circuits and the plurality of comparators may be connected to the RFID IC 116 of the antenna module 104A. The plurality of preconfigured power detector circuits and the plurality of comparators may consist of various circuit components such as preconfigured resistors, generic diodes and step recovery diodes, MOSFETs arranged in a circuit to regulate current in the plurality of preconfigured power detector circuits and the plurality of comparators. The various circuits components arranged in the plurality of preconfigured power detector circuits and the plurality of comparators may control and maintain conductivity based on the input voltage (Vᵢₙ) received from the control signal.

In some embodiments, the plurality of preconfigured power detector circuits and the plurality of comparators may further comprise a first preconfigured power detector circuit 120, a second preconfigured power detector circuit 122, a first comparator 124 and a second comparator 126. The plurality of preconfigured power detector circuits and the plurality of comparators may be configured to detect and compare an input voltage (Vᵢₙ) with a threshold voltage (Vₜₕ₁) and a threshold voltage (Vₜₕ₂). The first comparator 124 may be configured to compare the input voltage (Vᵢₙ) with the threshold voltage (Vₜₕ₁). The second comparator 126 may compare the input voltage (Vᵢₙ) with the threshold voltage (Vₜₕ₂). Herein, the RFID IC 116 may be configured to hold instructions to set the antenna module 104 in the through state or the connected state based on the detection and comparison of the input voltage (Vᵢₙ) received from the RFID reader 102 with the threshold voltage (Vₜₕ₁) and the threshold voltage (Vₜₕ₂).

Further, the antenna module 104A may comprise a plurality of rotary switch i.e. a first rotary switch 128 and a second rotary switch 130. The first rotary switch 128 may be connected to the first preconfigured power detector circuit 120. The first rotary switch 128 may further be regulated and configured to set the threshold voltage (Vₜₕ₁) for the antenna module 104A in order to set the antenna module 104 in connected state. In the connected state, the antenna module 104A may set the position of the local antenna 110. Further, the second rotary switch 130 may be connected to the second preconfigured power detector circuit 122. The second rotary switch 130 may further be regulated and configured to set the threshold voltage (Vₜₕ₂) for the antenna module 104A in order to set the antenna module 104A in through state. In the through state, the control signal may be transmitted to next antenna module 104B illustrated in FIG. 1C.

In some embodiments, the plurality of rotary switch may be a multiple pole rotary switch. In an example embodiment, the plurality of rotary switch may be a five-pole rotary switch. It may be noted that the number of poles of the plurality of rotary switch may vary according to a number of separate circuits that may be controlled by the plurality of rotary switch. The plurality of rotary switch may close or open the circuit based on the threshold voltage (Vₜₕ₁) set through a first rotating pin 132 of the first rotary switch 128 and the threshold voltage (Vₜₕ₂) set through a second rotating pin 134 of the second rotary switch 130. The plurality of rotary switch may initiate or inhibit a current flow to set the antenna module 104A between the connected state and the through state. In some embodiments, the plurality of rotary switch may correspond to a potentiometer or a variable resistor that may be regulated by an installer (user) to control the flow of current required to be passed from input pins/port of the plurality of rotary switches to output pins/port of the plurality of rotary switches.

In some example embodiments, the plurality of rotary switch may be replaced with a digital potentiometer, a plurality of dual-inline package (DIP) switches, a plurality of digital rotary encoders, or any other switch known in the art for setting the threshold voltage (Vₜₕ₁) and the threshold voltage (Vₜₕ₂).

In some embodiments, the plurality of rotary switch may be an electronic switch or a mechanical switch. For example, an installer (user) may set the plurality of rotary switch for each local antenna 110 position. Further, the local antenna 110 position may set a preconfigured resistor of each of the plurality of preconfigured power detector circuits of the antenna module 104A. In some embodiments, a preconfigured resistor of the first preconfigured power detector circuit 120 may be used to set the threshold voltage (Vₜₕ₁) value. Another preconfigured resistor of the second preconfigured power detector circuit 122 may be used to set the threshold voltage (Vₜₕ₂) value. Further, the input voltage (Vᵢₙ) of the control signal may be supplied from the RFID reader 102. Thereafter, the input voltage (Vᵢₙ) may be compared against the threshold voltage (Vₜₕ₁) and the threshold voltage (Vₜₕ₂) to decide between the two switching states i.e., the connected state or the through state of the antenna module 104A.

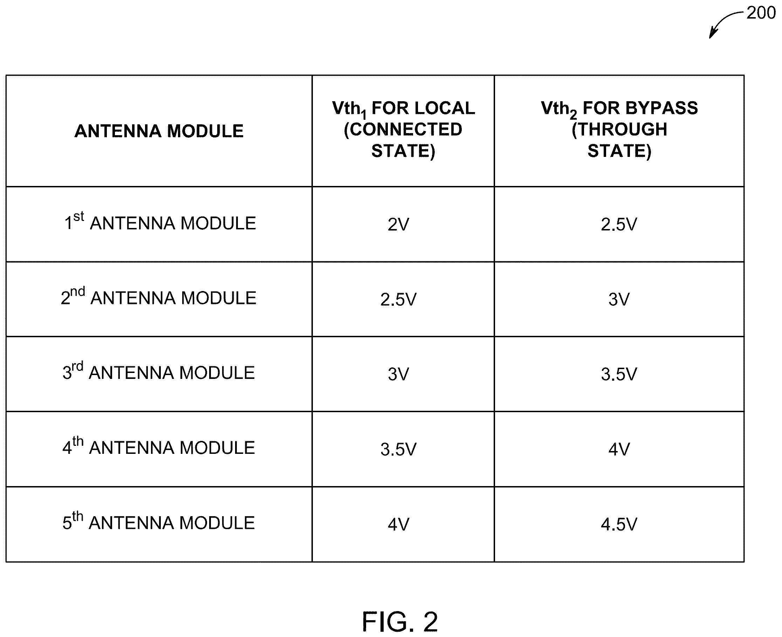

In an example embodiment, the installer may set the threshold voltage (Vₜₕ₁) as 2V for the connected state of the antenna module 104A, as shown by a table 200 of FIG. 2. Further, the installer may set the threshold voltage (Vₜₕ₂) as 2.5 V for the through state of the antenna module 104A. In some embodiments, the installer may be the user or any person who is authorized to access the system 100. The threshold voltage (Vₜₕ₁) of 2V and the threshold voltage (Vₜₕ₂) of 2.5 V may be compared with the input voltage (Vᵢₙ) of the control signal sent from the RFID reader 102. In one case, if the input voltage (Vᵢₙ) is same as that of the threshold voltage (Vₜₕ₁), i.e., Vᵢₙ= Vₜₕ₁, the antenna module 104A may be set in the connected state. In this case, the RFID reader 102 may read an RFID tag associated with the local antenna 110 of the antenna module 104A.

In another case, if the input voltage (Vᵢₙ) is greater than the threshold voltage (Vₜₕ₁) or the the input voltage (Vᵢₙ) is equal to the threshold voltage (Vₜₕ₂), i.e., Vᵢₙ > Vₜₕ₁ or Vᵢₙ = Vₜₕ₂, the antenna module 104A may be set in the through state. In this case, the control signal may be sent to the next antenna module 104B to again compare the input voltage (Vᵢₙ) with the threshold voltage (Vₜₕ₁) and the threshold voltage (Vₜₕ₂) of the next antenna module 104B to decide the switching state of the next antenna module 104B illustrated in FIG. 1C.

Therefore, the at least one RF switch 118, the plurality of preconfigured power detector circuits and the plurality of comparators may set the antenna module 104A in the connected state via the RFID IC 116 and allow communication with the antenna module 104A in response to receiving the control signal from the RFID reader 102, in case of Vᵢₙ=Vₜₕ. In some embodiments, the at least one RF switch 118 may be configured to set the antenna module 104A in the through state via the RFID IC 116 and communicate the control signal to the next antenna module 104B, in case of Vᵢₙ > Vₜₕ₁ or Vᵢₙ = Vₜₕ₂. It may be noted that after reading the RFID tag, the input voltage (Vᵢₙ) from the control signal may be configured to an incremented input voltage (Vᵢₙ) to bypass the antenna module 104A via the at least one RF switch 118 to the next antenna module 104B.

In some embodiments, the antenna module 104A may further comprise a direct coupling (DC) coupler 136 and a RF coupler 138. In some embodiments, the DC coupler 136 may be a resistive ladder with an impedance matching, a resistive divider. In some embodiments, the RF coupler 138 may be a microwave coupler. Further, the DC coupler 136 and the RF coupler 138 may split the incoming control signal. The DC coupler 136 may be configured to receive the input voltage (Vᵢₙ) of the control signal from the RFID reader 102, via the RF IN port 112. The received input voltage (Vin) may then be communicated to the plurality of preconfigured power detector circuits and the plurality of comparators. Further, the RF coupler 104 may be configured to receive a RF signal present the control signal from the RFID reader 102. The RF signal may include a power to ensure the required power input of the RFID IC 116 is within a specification of the RFID IC 116. The specification may include the maximum power at which the RFID IC 116 may operate.

In some embodiments, the RF coupler 138 may take a small portion of the control signal (e.g., 15 dB lower in power) and communicate that small portion to the RFID IC 116 to allow switching of the antenna module 104 between the connected state and the through state, via the at least one RF switch 118. As a result, multiple antenna modules may be coupled to the same communication line 106 without signal loss. In some embodiments, the control signal received by the antenna module 104A may flow through the DC coupler 136 and the RF coupler 138 to the at least one RF switch 118. In some embodiments, main portion of the control signal that passes through the DC coupler 136, the RF coupler 138 and to the at least one RF switch 118 may be then communicated to the next antenna module 104B in the through state, or to the local antenna 110 of the antenna module 104A in the connected state.

In some embodiments, the RF IN port 112, the RF OUT port 114, the second output port, the RFID IC 116, the at least one RF switch 118, the plurality of preconfigured power detector circuits, the plurality of comparator circuits, the plurality of rotary switch, the DC coupler 136 and the RF coupler 138 may be a part of the power sense-based switching circuit 108.

In various embodiments, the DC coupler 136 and the RF coupler 138 of each antenna module from the plurality of antenna modules 104 may be connected to the at least one RF switch 118. The plurality of preconfigured power detector circuits and the plurality of comparators and the RFID IC 116 may be connected between the DC coupler 136, the RF coupler 138 and the at least one RF switch 118 in a parallel connection.

As discussed above, the RFID reader 102 may be configured to read the plurality of antenna modules 104 arranged in a daisy chain configuration. Referring to FIG. 1C, the RFID reader 102 may comprise of a microcontroller 140. The microcontroller 140 may be configured to hold instructions to issue one or more commands of the RFID reader 102. Further, a digital to analog converter (DAC) 142 may be connected to the microcontroller 140 and configured to provide a DAC output voltage (Vₒᵤₜ).

In an example embodiment, the DAC 142 may have a specific voltage (V), e.g., the DAC 142 may have a 5 V. Further, the RFID reader 102 may comprise a coupler 144 connected to the DAC 142. The coupler 144 may be configured to superimpose the DAC output voltage (Vₒᵤₜ) on the RF signal to form the control signal for further transmission. It may be noted that the coupler 144 may superimpose the DAC output voltage (Vₒᵤₜ) on the RF signal using one or more signal processing techniques known in the art. Further, the DAC output voltage (Vₒᵤₜ) may be superimposed on the RF signal in such a way that later on DAC output voltage (Vₒᵤₜ) and the RF signal may be separated easily.

Further, the RFID reader 102 may comprise an antenna port 146 coupled between the coupler 144 and a radio frequency identification asynchronous integrated circuit (RFID ASIC) 148. The antenna port 146 may be configured to send the control signal to the DC coupler 136 and the RF coupler 138 of the plurality of antenna modules 104 in which the DAC output voltage (Vₒᵤₜ) may act as the input voltage (Vᵢₙ) in each of the plurality of antenna modules 104 for further switching of the plurality of the antenna modules 104.

In some embodiments, the RFID ASIC 148 may be configured to receive and store information about each of the plurality of antenna modules 104 from the control signal. The RFID reader 102 may further be configured to supply an input/output voltage and issue an inventory read command to read the plurality of antenna modules 104. Further, the RFID reader 102 may comprise a filter 150. The filter 150 may be configured to filter and match the control signal in the RFID reader 102 to suppresses unwanted components or noise from the control signal and to maximize power transfer from the control signal to the plurality of antenna modules 104.

It may be appreciated that the configuration of the antenna module 104A illustrated in FIGS. 1B and 1C allows for bi-directional communication through the antenna module 104A, for example, to and from an RFID tag, by selectively activating the local antenna 110 coupled with the antenna module 104A. It may be noted that in various embodiments, the RFID IC 116, the at least one RF switch 118 and the plurality of preconfigured power detector circuits and the plurality of comparators may be powered from a DC voltage which is the input voltage (Vᵢₙ) coupled over RF signal which is sent by the RFID reader 102 in the form of the control signal.

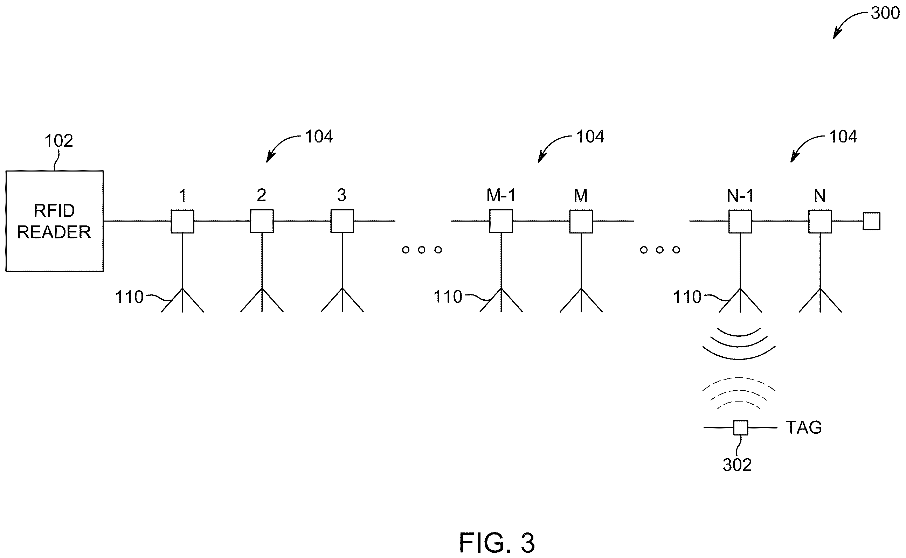

FIG. 3 illustrates a distributed antenna network 300 for the system for power control based antenna switching control mechanism, in accordance with an example embodiment of the present disclosure. FIG. 3 is described in conjunction with FIGS. 1A-2.

The distributed antenna network 300 may allow the RFID reader 102 to selectively switch the plurality of antenna modules 104 to connect the RFID reader 102 with the local antenna 110 of a selected antenna module. Successively, the RFID reader 102 may be able to communicate with an RFID tag 302 using control signals and obtain RFID data from the RFID tag 302. Further, the distributed antenna network 300 may comprise N number of local antennas. In some embodiments, the N number of local antennas may be implemented using the plurality of antenna modules 104 to selectively couple with each local antenna 110 to communicate with the RFID tag 302 associated with each antenna module of the plurality of antenna modules 104.

In some implementations, each antenna module may appear to the system as the RFID tag 302 having memory fields. Each antenna module may be controlled using the control signal sent by the RFID reader 102. For example, a unique bit value may be written to a memory field of the RFID IC 116 (by sending the control signal uniquely addressed to the RFID IC 116 using RFID transmission protocols) to select one antenna module from the plurality of antenna modules 104, which communicates the control signal to the RFID IC 116.

For example, a first set of antenna modules (1,2,3 . . . M) are in the through state. The antenna module (N-1) is in the connected state, such that the local antenna 110 connected to the antenna module (N-1) is activated. In the connected state of the antenna module (N-1), signals and data are communicated through a first set of antenna modules and to the antenna module (N-1), such that RFID communication may be provided between the RFID reader 102 and the RFID tag 302 (e.g., RFID signals/data, general purpose command signals, etc.). In some embodiments, the plurality of antenna modules 104 may be used in a known fixed installation. Further, the RFID IC 116 in each antenna module may be selectively addressed to activate a particular local antenna 110 coupled with one antenna module from the plurality of antenna modules 104 based on the detection of the input voltage (Vᵢₙ) and comparison of the input voltage (Vᵢₙ) with the threshold voltage (Vₜₕ₁) and the threshold voltage (Vₜₕ₂) by the plurality of preconfigured power detector circuits and the plurality of comparators.

Further, in the connected state of each antenna module, the RFID tag 302 within an RFID reading range of the local antenna 110 may be activated. Further, the RFID reader 102 may be able to communicate with the RFID tag 302 using RFID communication protocols. In some embodiments, the RFID reader 102 may be able to communicate with one or more RFID tags 302, using control signals, by selectively activating the local antenna 110 and without requiring modification to the RFID reader 102 to allow the selective activation of the local antenna 110 of each antenna module.

With respect to identifying which RFID tag is responding and communicating with the system, various different methods may be used, but are not limited to the one discussed herein. For example, signal strength may be used to determine the location of the responding RFID tag (e.g., the weaker the signal strength the further away the RFID tag 302 is located). In some embodiments, a received signal strength indicator (RSSI) may be used to determine the location of the responding RFID tags. In some embodiments, the phase of the RFID response may be used to determine the location of the RFID tag 302 that are responding. In some embodiments, a single local antenna 110 is provided for each expected RFID tag 302 (e.g., one local antenna per vehicle).

It may be noted that when power is switched off, the plurality of antenna modules 104 may be reset. Additionally, it may be noted there is no powering of the plurality of other antenna modules 104 after a connected antenna module 104.

In some implementations, the plurality of antenna modules 104 may be used in different applications with a base station communicating with other plurality of antenna modules 104 using appropriate commands or signals for the particular operating environment. For example, as described in more detail herein, the plurality of antenna modules 104 may be used in different RFID applications or in non-RFID applications.

For example, a scalable distributed antenna system may be implemented using RFID technology in a daisy chained antenna arrangement using the RF cable. In an embodiment, the RF cable used herein may be a single coaxial cable used to transmit RF signal or a DC over RF signal. Thus, various embodiments of a distributed antenna system when installed to cover large area, may be installed at lower cost and complexity. For example, a distributed 8-antenna system (to cover 8 individual vehicles) using standard 4-port RFID readers would require two readers and multiple lengths of RF cable or antenna multiplexers or one reader, but requiring external control wiring and interface as well as a significant length of coaxial cable. In accordance with various embodiments using antenna modules, one reader and seven "antenna modules" and a minimal length of RF cable may be used.

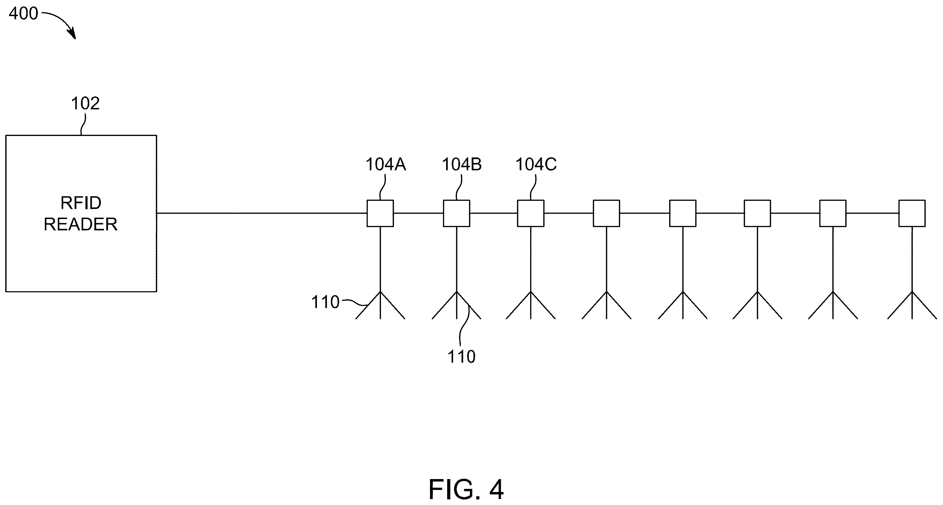

In various embodiments disclosed above, different configurations and arrangements of the plurality of antenna modules 104 may be implemented with the RFID reader 102, which is described in greater detail in conjunction with FIGS. 4, 5 and 6.

FIG. 4 illustrates a linear distributed antenna network configuration 400, in accordance with an example embodiment of the present disclosure. The linear distributed antenna network configuration 400 may include the antenna module 104A connected in a single serial arrangement, each of which is connected to the local antenna 110 that is connected to the second output port. For example, the plurality of antenna modules 104 are connected in the linear distributed antenna network configuration 400 with the RF OUT port 114 of the antenna module 104A connected to the next antenna module 104B in series. The RFID reader 102 sends the control signal to switch the plurality of antenna modules 104 in two switching states i.e. a through state and a connected state. In the connected state, the antenna module 104A in the linear distributed antenna network configuration 400 communicates with the RFID reader 102, via the local antenna 110. In the through state, the RFID reader 102 communicates to the next antenna module 104B connected to the antenna module 104A in the linear distributed antenna network configuration 400.

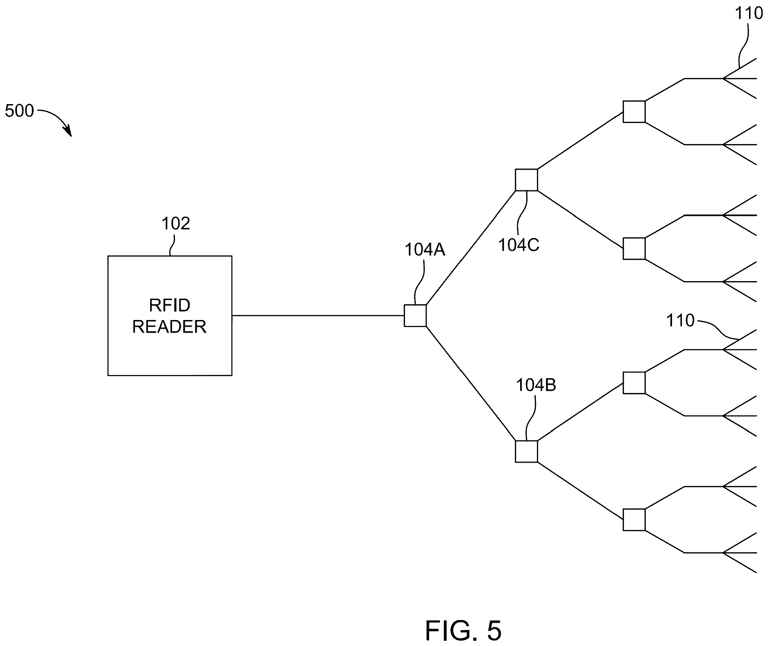

FIG. 5 illustrates a tree distributed antenna network configuration 500, in accordance with an example embodiment of the present disclosure. In the tree distributed antenna network configuration 500, the antenna module 104A may be connected to two antenna modules i.e., the antenna module 104B, an antenna module 104C, at the output. Further, each of the two antenna modules may then be connected to another two antenna modules, each of which are then further connected to the local antenna 110. For example, the plurality of antenna modules 104 are connected in the tree distributed antenna network configuration 500 with the RF OUT port 114 of the antenna module 104A connected to two other antenna modules i.e., the antenna module 104B, the antenna module 104C. The RFID reader 102 sends the control signal to switch the plurality of antenna modules 104 in two switching states i.e. a through state and a connected state. In the connected state, the antenna module 104A in the tree distributed antenna network configuration 500 communicates with the RFID reader 102, via the local antenna 110. In the through state, the RFID reader 102 communicates to either of the two antenna modules i.e.., the antenna module 104B, the antenna module 104C, connected to the antenna module 104A in the tree distributed antenna network configuration 500 based on the threshold voltage (Vₜₕ₁) and the threshold voltage (Vₜₕ₂).

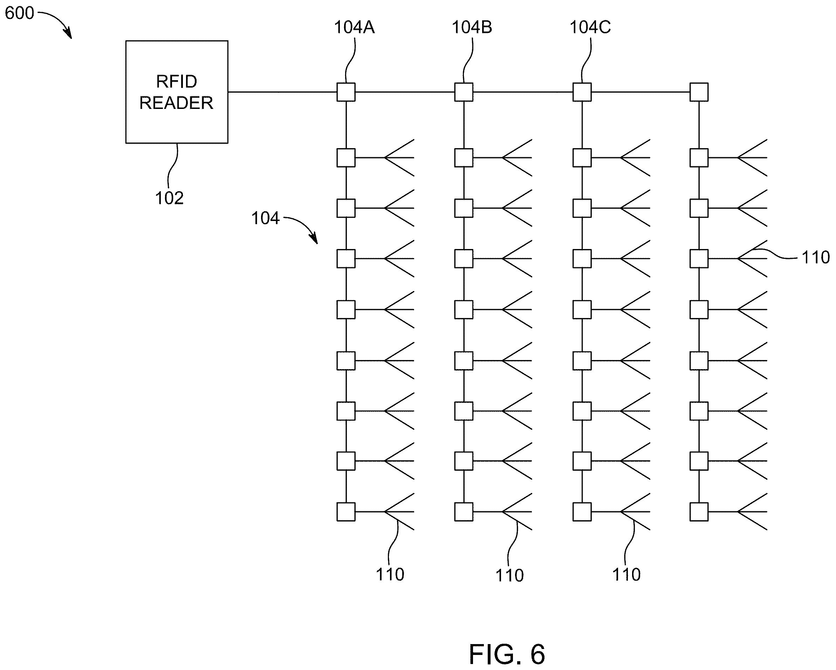

FIG. 6 illustrates a grid distributed antenna network configuration 600, in accordance with an example embodiment of the present disclosure. In some embodiments, each antenna module 104A may be connected to the plurality of antenna modules 104, each of which are then connected to the local antenna 110 connected to the second output port. For example, the plurality of antenna modules 104 is connected in the grid distributed antenna network configuration 600 with one or more of the plurality of antenna modules 104 having the RF OUT port 114 connected to the next antenna module 104B and two or more of plurality of the antenna modules 104 having the RF OUT port 114 connected to the plurality of antenna modules 104. The RFID reader 102 sends the control signal to switch the plurality of antenna modules 104 in two switching states i.e. a through state and a connected state. In the connected state, the antenna module 104A in the grid distributed antenna network configuration 600 communicates with the RFID reader 102, via the local antenna 110. In the through state, the RFID reader 102 communicates to one or more of the plurality of antenna modules 104 connected to the antenna module 104A in the grid distributed antenna network configuration 600 based on the threshold voltage (Vₜₕ₁) and the threshold voltage (Vₜₕ₂).

It will be apparent to a person skilled in the pertinent art that many different connection arrangements and configurations are contemplated by the present disclosure.

Various embodiments also are not limited to UHF (900 MHz) RFID and may be used for smart distributed antenna systems for other wireless technologies (e.g., Wi-Fi, wireless WAN, Bluetooth, etc.) that operate in various other frequency bands (e.g., 2.4 GHz, 5.8 GHz, etc.) and may be implemented in accordance with the present disclosure. For example, a 2.4 GHz radio transceiver may send out modulated 2.4 GHz control signals to the RFID ICs in smart switches which form and configure a smart distributed 2.4 GHz antenna system that then transmits/receives non-RFID signals (e.g., 2.4 GHz Wi-Fi or Bluetooth).

It may be noted that the functionality of various embodiments may be extended beyond port switching, and may include communication to a microcontroller over RFID, general purpose input/output (GPIO) capabilities (control LEDs, read sensors), etc. Thus, various embodiments provide an antenna module that may be used in applications for RFID where multiple read zones are needed or desired (e.g., airport garage with multiple parking spots, or package or product inventory). In various embodiments, a single RFID reader may be connected to multiple antenna modules connected to large number of vehicles. It should be appreciated that many topologies are possible. In operation, the plurality of antenna module may be controlled by an RFID protocol, allowing for easier implementation using a single coaxial cable for RF power and control. For example, the plurality of antenna module may be fed and controlled from one single port of an RFID reader with as little as 13 dBm. It may be noted that while the various embodiments are described in connection with particular operating characteristics, the various embodiments are not limited to the specific operating environment. Thus, one or more embodiments may be used in connection with different devices or in different applications.

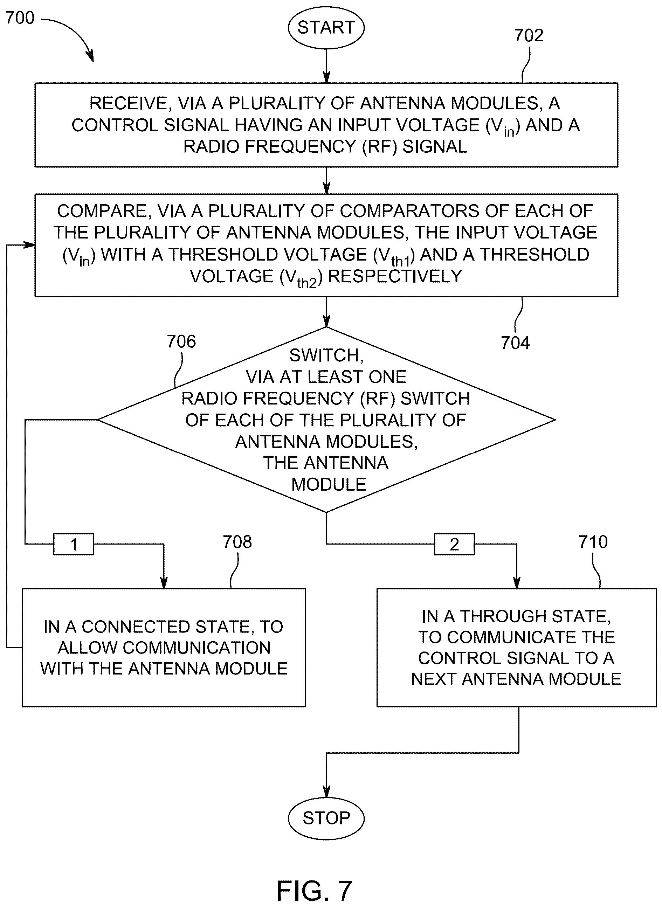

FIG. 7 illustrates a flowchart of a method 700 for power control based antenna switching control mechanism, in accordance with an example embodiment of the present disclosure. It may be appreciated that the method 700 may be implemented by one or more the embodiments disclosed herein, which may be combined or modified as desired or needed. Additionally, the steps in the method 700 may be modified, changed in order, performed differently, performed sequentially, concurrently or simultaneously, or otherwise modified as desired or needed. FIG. 7 is described in conjunction with FIGS. 1A-6.

At operation 702, the plurality of antenna modules 104 receives a control signal having an input voltage (Vᵢₙ) and a radio frequency (RF) signal. In some embodiments, the RFID reader 102 may be configured to send the control signal to the plurality of antenna modules 104 arranged in a daisy chain configuration, via the communication line 106. In some embodiments, the antenna module 104A may be configured for connection to other antenna modules or to an antenna module and appear to the RFID reader 102 as the RFID tag 302 which may mean that the RFID tag 302 is associated with each of the plurality of antenna modules 104.

In some embodiments, the RFID reader 102 may comprise the DAC 142 configured to provide the DAC output voltage (Vₒᵤₜ). The DAC output voltage (Vₒᵤₜ) may act as the input voltage (Vᵢₙ) for the antenna module 104. Further, the RFID reader 102 may comprise the coupler 144 configured to superimpose the DAC output voltage (Vₒᵤₜ) over the RF signal, for forming the control signal for transmission. The DC voltage is extracted from the control signal by the DC coupled of the plurality of antenna modules. The control signal generated by the RFID reader comprises the DC voltage and the RF signal.

For example, the RFID reader 102 sends a control signal comprising an input voltage (Vᵢₙ) of 3 volts (V) to an antenna module arranged in daisy chain configuration with a plurality of antenna modules 104.

Further, the plurality of preconfigured power detector circuits detects the input voltage (Vᵢₙ). In some embodiments, the plurality of rotary switch may be connected to the plurality of preconfigured power detector circuits. The plurality of rotary switch may be configured for setting the threshold voltage (Vₜₕ₁) and the threshold voltage (Vₜₕ₂) for the antenna module 104. In some example embodiments, the plurality of rotary switch may be replaced with a digital potentiometer, a plurality of dual inline package (DIP) switches, a plurality of digital rotary encoders, or any other switch known in the art for setting the threshold voltage (Vₜₕ₁) and the threshold voltage (Vₜₕ₂). In some embodiments, the antenna module may comprise the RFID IC 116 coupled to the plurality of preconfigured power detector circuits. For example, the threshold voltage (Vₜₕ₁) is set to 3V and the threshold voltage (Vₜₕ₂) is set to 3.5V.

At operation 704, the plurality of comparators of each of the plurality of antenna modules may be configured to compare the input voltage (Vᵢₙ) with the threshold voltage (Vₜₕ₁) and the threshold voltage (Vₜₕ₂) respectively. In some embodiments, the plurality of rotary switch may be connected to the plurality of preconfigured power detector circuits. The plurality of rotary switch may be configured for setting the threshold voltage (Vₜₕ₁) and the threshold voltage (Vₜₕ₂) for the antenna module 104. In an alternate embodiment, the plurality of preconfigured power detector circuits may be connected with a variable resistor or a potentiometer that enables setting of the threshold voltage (Vₜₕ₁) and the threshold voltage(Vₜₕ₂). antenna module may comprise the RFID IC 116 coupled to the plurality of comparators.

Further, each antenna module of the plurality of antenna modules 104 may comprise the DC coupler 136 that is configured to receive the input voltage (Vᵢₙ) of the control signal from the RFID reader 102. Further, each antenna module of the plurality of antenna modules 104 may comprise the RF coupler 138 that is configured to receive the RF signal of the control signal from the RFID reader 102. The RFID reader 102 may comprise the antenna port 146 configured to send the control signal to the DC coupler 136 and the RF coupler 138 of the antenna module 104.

For example, the DC coupler 136 of the antenna module 104A receives the input voltage (Vᵢₙ) of 3V. The Vᵢₙ is detected by the plurality of preconfigured power detector circuits and compared by the plurality of comparators, with the Vₜₕ₁ and Vₜₕ₂ set by the plurality of rotary switch.

At operation 706, the at least one RF switch 118 of each of the plurality of antenna modules, switches the antenna module 104A, at 706. In some embodiments, the at least one RF switch 118 may switch the antenna module 104A in two switching states: (1) the connected state and (2) in the through state. In some embodiments, the RFID IC 116 may be configured to switch the antenna module 104A between the connected state and the through state. In some embodiments, the DC coupler 136 and the RF 138 coupler of the antenna module 104A may be connected to the RF switch 118. Further, the plurality of preconfigured power detector circuits, the plurality of comparators and the RFID IC 116 may be connected between the DC coupler 136, the RF coupler 138 and the RF switch 118 in a parallel connection.

In case (1), if the input voltage (Vᵢₙ) is same as that of the threshold voltage (Vₜₕ₁) of the local antenna 110, i.e., Vᵢₙ₌ Vₜₕ. In this case, the at least one RF switch 118 sets the antenna module 104A in the connected state, to allow communication with the antenna module 104A when Vᵢₙ = Vₜₕ, at 708. For example, the Vₜₕ₁ is set to 3 V which is equal to the Vᵢₙ, the antenna module 104 may be switched in the connected state.

In case (2), if the input voltage (Vᵢₙ) is greater than the threshold voltage (Vₜₕ₁) or equal to the threshold voltage (Vₜₕ₂), i.e., Vᵢₙ > Vₜₕ₁ or Vᵢₙ = Vₜₕ₂, the antenna module 104A may be set in the through state, at step 710. For example, the Vᵢₐ is set to 3.5 V which is equal to Vₜₕ₂, the antenna module 104A may be switched in the through state to communicate the control signal to the next antenna module 104B.

In some embodiments, the method 700 may further comprise configuring, via the RFID reader 102, the input voltage (Vᵢₙ) to an incremented input voltage to bypass the antenna module 104A to the next antenna module 104B. The next antenna module 104B may be checked again via the plurality of preconfigured power detector circuits and the plurality of comparators of the next antenna module 104B whether to allow communication with the next antenna module 104B based on the threshold voltage (Vₜₕ₁) and the threshold voltage (Vₜₕ₂) of the next antenna module. 104B

For example, after the connected state, when the RFID reader 102 has read the antenna module 104A with the Vₜₕ₁ = 3V and needs to read the next antenna module 104B, the Vᵢₙ may be configured by the RFID reader to an incremented input voltage of 3.5 V to bypass the antenna module 104A to the next antenna module 104B.

In some embodiments, the RFID reader 102 may be configured to read one or more RFID tags 302 associated with each antenna module of the plurality of antenna modules 104.

It should be noted that the plurality of antenna modules 104 may be operated such that one of the antenna module is active at any one time by selectively controlling the RFID IC 116 of a particular antenna module as described herein, which allows the RFID reader 102 to activate and communicate with a particular antenna module. Thus, a microcontroller 140 may issue an inventory read command via the RFID ASIC 148 to read one or more RFID tags 302, in case of the connected state. Herein, the microcontroller 140 may be configured to hold instructions to issue one or more command to the RFID reader 102 and issue the inventory read command with as less delay as possible. In some embodiments, the method 700 may be implemented or performed using one or more systems described herein, such as the plurality of antenna modules 104. The steps also may be performed by a RFID reader 102 or a controller, such that the controller operates as a specialized processing machine/specialized hardware.

Thus, various embodiments may provide a plurality of antenna modules that allow for a power control based antenna switching control mechanism to operate using a communication line (e.g., a RF cable) to communicate with the plurality of antenna modules. The control systems and methods include using Control signals to selectively activate an antenna module that is coupled with the plurality of other antenna modules in order to select the antenna module for use in communication, such as with an RFID tag.

It should be noted that one or more embodiments may comprise one or more microprocessors (which may be embodied as a processor) and a memory, coupled via a system bus. The microprocessor can be provided by a general purpose microprocessor or by a specialized microprocessor (e.g., an ASIC). In one embodiment, the system can comprise a single microprocessor which can be referred to as a central processing unit (CPU). In another embodiment, one or more configurations described herein can comprise two or more microprocessors, for example, a CPU providing some or most of the scanning functionality and a specialized microprocessor performing some specific functionality, such as to determine distance information and correlate that information with the acquired image information. A skilled artisan would appreciate the fact that other schemes of processing tasks distribution among two or more microprocessors are within the scope of this disclosure. The memory can comprise one or more types of memory, including but not limited to: random-access-memory (RAM), non-volatile RAM (NVRAM), etc.

It should be noted that, for example, the various embodiments may communicate between components using different standards and protocols. For example, the wireless communication can be configured to support, for example, but not limited to, the following protocols: at least one protocol of the IEEE 802.11/802.15/802.16 protocol family, at least one protocol of the HSPA/GSM/GPRS/EDGE protocol family, TDMA protocol, UMTS protocol, LTE protocol, and/or at least one protocol of the CDMA/IxEV-DO protocol family.

The flowcharts and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems which perform the specified functions or acts, or combinations of special purpose hardware and computer instructions.

The corresponding structures, materials, acts, and equivalents of any means or step plus function elements in the claims below are intended to include any structure, material, or act for performing the function in combination with other claimed elements as specifically claimed. The description of the present disclosure has been presented for purposes of illustration and description, but is not intended to be exhaustive or limited to embodiments in the form disclosed. Many modifications and variations will be apparent to those of ordinary skill in the art without departing from the scope and spirit of embodiments of the disclosure. The embodiments were chosen and described in order to best explain the principles of embodiments and practical application, and to enable others of ordinary skill in the art to understand embodiments with various modifications as are suited to the particular use contemplated.

Furthermore, as will be appreciated by one skilled in the art, aspects of the present disclosure may be embodied as a system, method, or computer program product. Accordingly, aspects of various embodiments may take the form of an entirely hardware embodiment, an entirely software embodiment (including firmware, resident software, micro-code, etc.) or an embodiment combining software and hardware aspects that may all generally be referred to herein as a "circuit," "module", "system" or "sub-system." In addition, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM) or similar DVD-ROM and BD-ROM, an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing. Computer program code for carrying out operations for one or more embodiments may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

At least some of the present disclosure is described herein with reference to flowchart illustrations and/or block diagrams of methods, apparatus (systems) and computer program products according to embodiments described herein. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks and when implemented in one or more embodiments, results in a transforming or converting a general purpose computer/processor/hardware to a specialized computer/processor/hardware that improves the technological art.

The foregoing descriptions of specific embodiments have been presented for purposes of illustration and description. They are not intended to be exhaustive or to limit the embodiments to the precise forms disclosed, and obviously many modifications and variations are possible in light of the above teaching. The embodiments were chosen and described in order to best explain principles and practical applications thereof, and to thereby enable others skilled in the art to best utilize the various embodiments with various modifications as are suited to the particular use contemplated. It is understood that various omissions and substitutions of equivalents are contemplated as circumstances may suggest or render expedient, but these are intended to cover the application or implementation without departing from the spirit or scope of the claims. The following claims are in no way intended to limit the scope of embodiments to the specific embodiments described herein.

## Claims

1. A system comprising:
a plurality of antenna modules arranged in a daisy chain configuration and configured to receive, from a radio frequency identification (RFID) reader, a control signal having an input voltage (Vᵢₙ) and a radio frequency (RF) signal, via a communication line, wherein each antenna module of the plurality of antenna modules comprises:
an antenna element;
at least one radio frequency (RF) switch configured to couple the antenna element with the RFID reader based at least on a comparison of the input voltage (Vᵢₙ) with a threshold voltage (Vₜₕ₁) and a threshold voltage (Vₜₕ₂), wherein the at least one RF switch is configured to (1) allow communication with the antenna module in a connected state or (2) communicate the control signal to a next antenna module in a through state.

2. The system of claim 1, wherein the at least one RF switch allows communication with the antenna module when Vᵢₙ = Vₜₕ₁; or communicates the control signal to a next antenna module when Vᵢₙ > Vₜₕ₁ or Vᵢₙ = Vₜₕ₂.

3. The system of claim 1, wherein the Vₜₕ₁ corresponds to the threshold voltage for the connected state and the Vₜₕ₂ corresponds to the threshold voltage for the through state.

4. The system of claim 1 further comprising a plurality of preconfigured power detector circuits configured to detect the input voltage (Vᵢₙ) and a plurality of comparators configured to compare the input voltage (Vᵢₙ) with the threshold voltage (Vₜₕ₁) and the threshold voltage (Vₜₕ₂) respectively.

5. The system of claim 4, wherein a plurality of rotary switch is connected to the plurality of preconfigured power detector circuits and the plurality of comparators, and configured for setting the threshold voltage (Vₜₕ₁) and the threshold voltage (Vₜₕ₂) for each antenna module.

6. The system of claim 1, wherein each antenna module further comprising:
a direct coupling (DC) coupler that is configured to receive the input voltage (Vᵢₙ) of the control signal from the RFID reader; and
an RF coupler that is configured to receive the RF signal of the control signal from the RFID reader.

7. The system of claim 6, wherein the RFID reader further comprises of at least:
a digital to analog converter (DAC) configured to provide a DAC output voltage (Vₒᵤₜ), wherein the DAC output voltage (Vₒᵤₜ) acts as the input voltage (Vᵢₙ) for the antenna module;
a coupler configured to superimpose the DAC output voltage (Vₒᵤₜ) over the RF signal, for forming the control signal for transmission; and
an antenna port configured to send the control signal to the DC coupler and the RF coupler of the antenna module.

8. The system of claim 1, wherein the RFID reader is configured to read one or more RFID tags associated with each antenna module of the plurality of antenna modules.

9. The system of claim 1, wherein each antenna module further comprises an RFID integrated circuit (IC) coupled to the plurality of preconfigured power detector circuits and the plurality of comparators, and configured to switch each antenna module between the connected state and the through state.

10. The system of claim 5, wherein the DC coupler and the RF coupler of each antenna module are connected to the at least one RF switch.

11. A method comprising:
receiving, via a plurality of antenna modules arranged in a daisy chain configuration, a control signal having an input voltage (Vᵢₙ) and a radio frequency (RF) signal via a communication line from a radio frequency identification (RFID) reader; and
switching, via at least one radio frequency (RF) switch of each of the plurality of antenna modules configured to couple the antenna element with the RFID reader based at least on a comparison of the input voltage (Vᵢₙ) with a threshold voltage (Vₜₕ₁) and a threshold voltage (Vₜₕ₂), the antenna module (1) in a connected state, to allow communication with the antenna module or (2) in a through state, to communicate the control signal to a next antenna module based on the comparison.

12. The method of claim 11, further comprising:
allowing, via the at least one RF switch, communication with the antenna module when Vᵢₙ = a threshold voltage (Vₜₕ₁); or
communicating, via the at least one RF switch, the control signal to a next antenna module when Vᵢₙ > Vₜₕ₁ or Vᵢₙ = a threshold voltage (Vₜₕ₂).

13. The method of claim 11 further comprising:
detecting, via a plurality of preconfigured power detector circuits, the input voltage (Vᵢₙ); and
comparing, via a plurality of comparators of each of the plurality of comparators antenna modules, the input voltage (Vᵢₙ) with the threshold voltage (Vₜₕ₁) and the threshold voltage (Vₜₕ₂) respectively.

14. The method of claim 11, wherein each antenna module further comprising:
a direct coupling (DC) coupler that is configured to receive the input voltage (Vᵢₙ) of the control signal from the RFID reader; and
an RF coupler that is configured to receive the RF signal of the control signal from the RFID reader.

15. The method of claim 14, wherein each antenna module further comprises an RFID integrated circuit (IC) coupled to the plurality of preconfigured power detector circuits and the plurality of comparators, and configured to switch each antenna module between the connected state and the through state.
